# EUROPEAN PATENT SPECIFICATION

(11) **EP 0 781 676 B1**
(45) Date of publication and mention of the grant of the patent: **02.06.1999**
(21) Application number: 97200958.3
(22) Date of filing: 06.09.1995
(51) Int. Cl.: B60K 1/00, B60K 1/04

(54) **A power driving system, electric power unit and power transmitting unit for electric vehicles**
Antriebssystem, elektrische Antriebseinheit und Kraftübertragungs-Einheit für elektrische Fahrzeuge
Système d'entraînement, unité de propulsion électrique et unité de transmission de puissance pour des véhicules électriques

(30) Priority: 07.09.1994 JP 213523/94
(43) Date of publication of application: 02.07.1997
(62) Divisional of application: 95306245.2
(73) Proprietor: SEIKO EPSON CORPORATION, Tokyo 163 (JP); TOKYO R & D CO. LTD., Minato-ku, Tokyo 106 (JP)
(72) Inventor: Endo, Ken-Ichi, Suwa-shi, Nagano-ken 392 (JP); Yamakoshi, Issei, Suwa-shi, Nagano-ken 392 (JP); Ono, Masao, c/o Tokyo R & D Co. Ltd., Yokohama-shi, Kanagawa-ken 233 (JP); Fukazawa, Tamotsu, c/o Tokyo R & D Co. Ltd., Yokohama-shi, Kanagawa-ken 233 (JP)
(74) Representative: Sturt, Clifford Mark

(56) References cited:
- EP-A- 0 539 269
- CH-A- 675 935
- DE-A- 2 058 729
- DE-A- 4 126 311

## Description

The present invention relates to a power driving system, an electric power apparatus and a power transmitting apparatus for use in electric vehicles. In particular, it relates to an electric power apparatus and power transmitting apparatus having a unit structure, and to a power driving system comprising such apparatus. Furthermore, the invention particularly relates to an electric power apparatus which can easily be replaced and assembled, and a power transmitting apparatus which has improved efficiency of power transmission and is automated in control, for achieving an improvement in overall traveling performance.

Recently, attention has been focused on electric vehicles propelled by the use of electric motors for traveling as next-generation vehicles to be substituted for vehicles using internal combustion engines. In other words, it is expected that electric vehicles can solve a great part of environmental problems such as exhaust gas and noise of vehicles, the exhaust gas being said to be responsible for air pollution in percentage of about 70 %, and that the life of petroleum resources can be prolonged double or more.

The electric vehicle includes, as a power driving system, a battery power supply, an electric motor for traveling, and a motor driving circuit for controlling rotation of the motor. The motor power generated by the motor is transmitted through a power transmitting apparatus to rotate a road wheel for moving the vehicle.

DE 2058729 discloses an electric power unit for an electric vehicle comprising a battery power supply comprising a plurality of storage cells, a motor driving circuit, a charger and a case with a lid, which case houses the storage cells.

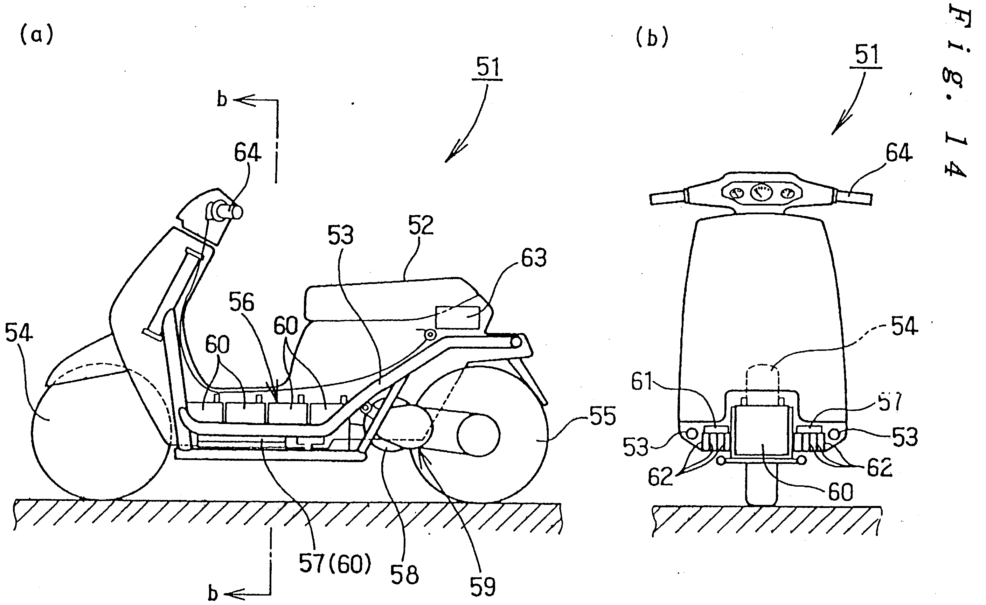

The following description refers to, for example, an electric scooter as one kind of electric vehicle. As shown in Fig. 14 of the accompanying drawings, an electric scooter 51 comprises road wheels 54, 55 suspended from a main frame 53 of a vehicle body 52 through shock absorbers (not shown), a battery power supply 56 disposed substantially centrally of the vehicle body 52 in a low-level position, a motor driving circuit 57 for supplying electric power from the battery power supply 56 to the motor while controlling the power in accordance with manual instructions from a driver, a electric motor 58 for traveling rotated and controlled by the motor driving circuit 57, and a power transmitting apparatus 59 for transmitting rotative driving forces generated by the motor 58 to a road wheel 55.

The battery power supply 56 constituting an electric power system of the electric vehicle is made up by, for example, four storage cells 60, 60... fixed to a frame through a bracket. These storage cells 60 are connected in series by large-diameter cables to produce a predetermined value of voltage while preventing power loss. On both sides of the battery power supply 56, there are respectively disposed the motor driving circuit 57 and a charger 61 which are fixed to the vehicle body 52 through brackets and are connected to input/output terminals of the battery power supply 56 by cables. Further, heat radiation from the motor driving circuit 57 and the charger 61 is accelerated by heat radiating plates 62 provided on respective parts of the vehicle body 52 located thereunder so that they can maintain normal operation. Thus, the battery power supply 56, the motor driving circuit 57 and the charger 61 are fixedly mounted to the vehicle body 52 through the respective brackets in separate relation and are interconnected via a cable assembly.

Incidentally, denoted by reference numeral 63 is a control circuit for controlling the rotational speed of the motor, the control circuit being electrically connected to the motor driving circuit 57 and an accelerator grip on a steering handle 64 by wiring cords, so that a control signal depending on operation of the accelerator grip by the driver is output to the motor driving circuit 57.

The motor driving circuit 57, connected to the battery power supply 56, supplies a preset amount of electric power to the electric motor 58, whereupon the electric motor 58 is operated at a predetermined rotational speed and driving forces produced by the motor are transmitted to the rear wheel 55 through the power transmitting apparatus 59. As the power transmitting apparatus 59, there is generally known a 2-speed clutch transmission using a plurality of gear mechanisms disposed in parallel, or a continuously variable transmission using a friction transmitting belt.

The multistage transmission is of the structure that a plurality of gear mechanisms comprising gear trains with different gear ratios from each other are provided, and the motor drive side is coupled to one of the gear mechanisms selected by the driver through mechanical meshing realized by a make-and-break clutch. Specifically, opposed rotating clutch plates are attached to an output shaft of the motor and an input shaft of each of the gear mechanisms, respectively, and are mechanically moved into contact with or away from each other to apply or cut off the driving forces of the motor. The gear trains with different gear ratios are thereby selectively driven to change the rotational speed transmitted. The above clutch operation is manually performed by the driver through a cam, a lever, a link mechanism, etc. based on judgement made by the driver in consideration of the current situation.

The belt type continuously variable transmission (CVT) is an apparatus comprising a driver pulley provided on the motor side, a driven pulley provided on the rear wheel side, and a belt extending around both the pulleys, so that the driving forces of the motor are transmitted to the rear wheel side through friction forces produced between the belt and the pulleys. The belt is formed of a belt having a V-shaped cross-section which can produce greater friction forces than a flat belt by virtue of the wedging effect for increasing the transmission efficiency. The diameter of one of the pulleys is continuously increased or decreased to continuously change the ratio in radius of rotation between the pulleys, thereby varying the rotational speed input to the driver pulley.

However, the battery portion of the prior art electric vehicle has been disadvantageous in that, because the separate storage cells are connected in series by cables, it takes time and is troublesome to remove and connect the cables when the storage cells are assembled or replaced by new ones. In other words, harnesses for terminals of the storage cells must be removed one by one, and the corresponding relationship of the terminals and the harnesses is so laborious to discriminate that connection failures may sometimes cause. Further, because the battery portion, the motor driving circuit, and the charger are also interconnected by a cable assembly, this has raised a disadvantage that the operation is likewise complicated when those parts are assembled in manufacture or replaced by new ones in the case of partial failure of the equipment.

In an environment under extremely low temperatures such as encountered in the winter, electrochemical changes in the storage cells become less active and the charging/discharging ability of the storage cells is greatly reduced. This has accompanied with it a risk that the electric vehicle may fail to travel.

When the electric vehicle continues traveling for a long time, the motor driving circuit is heated during continuous traveling and the circuit function is lowered in spite of the design to accelerate heat radiation. This has an accompanied drawback that the electric vehicle may fail to travel even if the storage cells are replaced by fully charged ones and no problems exist with regard to the power source.

Further, in the multistage transmission conventionally used as the power transmitting apparatus, because the clutch operation for speed change is generally effected by a foot (in four-wheeled vehicles) or a hand (in two-wheeled vehicles) upon judgment of the driver, it is rather difficult to make or break the clutch connection at the proper timing, resulting in a drawback that the timing of the clutch operation is sometimes out of sync.

In the conventional belt type continuously variable transmission, because the driving forces are transmitted through friction transmission between the belt and the pulleys, it has a drawback that the transmission efficiency is low and the traveling ability of the electric vehicle cannot be improved. This drawback is presumably attributable to the face that utilization of friction forces produced between the belt and the pulleys for transmitting the driving forces between them causes slipping during the transmission to such an extent that no appreciable problems occur in practical use.

It is an object of the present invention to provide an electric power unit which is simple in structure, and which can be easily assembled and readily replaced.

It is another object of the present invention to provide a power transmitting unit which is reliable, has an increased efficiency and improved performance.

It is a further object of the present invention to improve the overall traveling ability of an electric vehicle.

According to one aspect of the present invention, there is provided an electric power unit for an electric vehicle comprising:
a battery power supply comprising a plurality of storage cells;
a motor driving circuit;
a charger; and
a case with a lid, which houses the storage cells;
the motor driving circuit and the charger being mounted to the case;
   characterised in that:
the lid comprises a plate substrate having electrical connectors for electrically connecting the motor driving circuit, the charger and the battery power supply; and the motor driving circuit, the charger and the battery power supply having connectors in positions corresponding to the connectors of the plate substrate.

In one embodiment an electric power unit for an electric automobile including, as a power system, a battery power supply, a motor, and a controller for controlling rotation of the motor, the electric power unit comprises a plurality of storage cells making up the battery power supply, a case housing the storage cells, a motor driving circuit and a charger both mounted on the case, a plate substrate covering the storage cells, and sockets for connecting respective terminals of the storage cells, the motor driving circuit and the charger.

The case of the electric power unit preferably includes heat radiating plates, on which the motor driving circuit and the charger are mounted, and the sockets are provided on a lower surface of the plate substrate accordingly, so that the sockets are connected to the respective terminals when the plate substrate is fitted to the case. In another embodiment, a power transmitting unit for an electric vehicle which includes as a driving system, a motor, a clutch, a transmission, and a power transmitting mechanism, comprises an automatic 2-speed clutch transmission consisting of a dog clutch arranged to be rotatable with a motor output shaft and movable in the coaxial direction, and gear trains including first and second transmission gears which are supported respectively on both sides of the dog clutch to be loosely rotatable and are mechanically brought into contact with or away from the dog clutch, the dog clutch comprising a clutch movable portion provided to be movable in the axial direction of the motor output shaft and including a permanent magnet, and a clutch driving portion disposed around the clutch movable portion and including excitation coils.

Preferably the clutch driving portion has, at both ends, yokes set to have a larger thickness than yokes at both ends of the clutch movable portion, thereby constituting a magnetic circuit to induce electromagnetic forces of which acting direction is reversed as the clutch movable portion is moved by excitation of the clutch driving portion.

The automatic 2-speed clutch transmission may be housed in an enclosed case provided with heat radiating plates.

With the electric power unit according to the present invention, the drawbacks attributable to the cable connection can be solved totally. It is thus possible to prevent troubles caused by disconnection of the connecting cables and contact failures of the connectors. Also, since the storage cells can be interconnected in series or so in a predetermined way just by mounting the plate substrate in place, troublesome operation of attaching the connecting cables of the storage cells one by one is eliminated. For example, in the preferred embodiment, the battery power supply comprising the plurality of storage cells, the charger, and the motor driving circuit are mounted in and on the case, and the connectors of those components are coupled by the sockets to interconnect the components without using cables.

When replacing the exhausted battery in usual case, it is just required to replace the electric power unit having a reduced battery capacity by another fully charged electric power unit at a time. Accordingly, there is no need of detaching and attaching the connecting cables whenever each storage cell is unloaded and loaded.

Further, when replacing the battery after the electric automobile has continued traveling, the motor driving circuit which may fail to operate due to the heat generated by continuous operation can also be replaced by new one under the normal temperature at the same time, enabling the electric automobile to further continue traveling.

When the electric power unit is thus replaced together, performance of the storage cells can be maintained at a satisfactory level and the cell life can drastically be prolonged by charging the exhausted electric power unit under strict temperature control. Specifically, when a storage cell is charged in a conventional manner, it cannot be charged at a desired constant temperature because the temperature of the storage cell itself is raised during the charging, or the temperature of open air is varied depending on the season. On the other hand, by charging the electric power unit of the present invention while it is entirely immersed in a constant-temperature water bath at 30 °C, for example, the electric power unit can be charged while keeping it in a proper temperature condition. It is thus possible to prevent a reduction in reliability of the storage cells due to temperature variations, maintain performance of the storage cells at a satisfactory level, and hence prolong the cell life.

When the case is made of, for example, a material having good thermal conductivity, the charger and the motor driving circuit are mounted on the case, and heat radiating plates are provided near the mounted positions of those components, there is an additional advantage that heat radiation is accelerated and a great heat radiating effect is provided.

Additionally, when the motor driving circuit and the charger are mounted in the vicinity of the battery power supply, the heat generated upon operation of the motor driving circuit or the charger can be conducted to the side of the storage cells through the case having high thermal conductivity in environment under low temperatures such as encountered in the winter, enabling the storage cells of the battery power supply to be heated appropriately and kept at a proper temperature. Even in low-temperature environment, therefore, a deterioration in performance of the storage cells is prevented.

The power transmitting unit of the present invention utilises a meshing clutch which engages with one of two driver gears depending upon which speed is selected. This meshing arrangement, in contrast to prior art clutches having parallel clutch plates or the like, prevents slipping and thus provides more reliable power transmission.

Further, the power transmitting unit of the aforementioned embodiment has an additional advantage. Since the make- and break-operation of the clutch is electrically performed by utilizing electromagnetic forces, the clutch can be actuated in electrical interlock with the motor to improve performance of the clutch operation. That is to say, when the clutch is actuated for the make- and break-operation, the torque and the rotational speed of the motor can be controlled to be temporarily changed into proper ones in response to a clutch switching signal.

Furthermore, the power transmitting unit having a clutch in which the end yokes of the clutch driving portion are of greater thickness than those of the clutch movable portion has an additional advantage of increased efficiency. When the clutch movable portion is positioned at the end of its movement stroke, attraction forces are exerted on the permanent magnet by co-operation of the permanent magnet of the clutch movable portion and the yoke of the clutch driving portion so as to act always in the direction of causing the clutch movable portion to move into mesh with a driver transmission gear. Therefore, when the clutch movable portion reaches the stroke end, the clutch movable portion will not return to the neutral position and can be held in a pressed condition against the driver transmission gear even if the excitation coils of the clutch driving portion are not energized. Otherwise, since the direction in which electromagnetic forces are acting on the clutch movable portion is reversed before reaching the opposite ends of movement stroke of the clutch movable portion such that the forces pressing the clutch movable portion in the direction of movement under excitation continues acting even after the excitation coils are stopped from being energized, it is just required to energize the excitation coils of the clutch driving portion only at the beginning of movement of the clutch movable portion. As a result, the power consumed by the clutch operation can be reduced to a necessary minimum value. When breaking the connection of the clutch, i.e., when returning the clutch movable portion of the dog clutch to the neutral position, or when connecting it to the gear on the opposite side, a current is supplied to the excitation coils in the reversed direction. The clutch movable portion is thereby moved in a similar manner as mentioned above, but in the reversed direction.

Moreover, when the automatic 2-speed clutch transmission is housed in the enclosed case provided with the heat radiating plates, the case can serve as a casing while ensuring efficient heat radiation, resulting in the simplified structure.

Embodiments of the present invention will now be described with reference to the accompanying drawings, of which:
Fig. 1 is a side view schematically showing the construction of an electric motorcycle as an embodiment of an electric automobile of the present invention.
Fig. 2 is a sectional view taken along line II - II in Fig. 1, the view showing an embodiment of an electric power unit of the present invention.
Fig. 3 is a plan view showing an embodiment of the electric power unit of the present invention.
Fig. 4 is an exploded perspective view showing an embodiment of the electric power unit of the present invention.
Fig. 5 is an overall horizontal sectional view showing an embodiment of a power transmitting unit of the present invention.
Fig. 6 is an overall side view showing an embodiment of the power transmitting unit of the present invention.
Fig. 7 is a sectional view taken along line VII - VII in Fig. 6, the view showing an embodiment of the power transmitting unit of the present invention.
Fig. 8 concerns a power transmitting unit of the present invention and is a perspective view showing the construction of a dog clutch in an automatic 2-speed clutch transmission.
Fig. 9 concerns a power transmitting unit of the present invention and is a perspective view showing a clutch movable portion and a clutch driving portion of the dog clutch.
Fig. 10 concerns a power transmitting unit of the present invention and is a sectional view showing the clutch movable portion and the clutch driving portion of the dog clutch.
Fig. 11 is a sectional view showing a clutch movable portion and a clutch driving portion of the prior art clutch for comparison with the power transmitting unit of the present invention.
Fig. 12 is a graph for explaining forces acting on the electromagnetically operated clutch movable portion of the prior art for comparison with the power transmitting unit of the present invention.
Fig. 13 concerns a power transmitting unit of the present invention and is a graph for explaining forces acting on the electromagnetically operated clutch movable portion in one embodiment.
Fig. 14 is a side view schematically showing an electric scooter as an example of a prior art electric automobile.

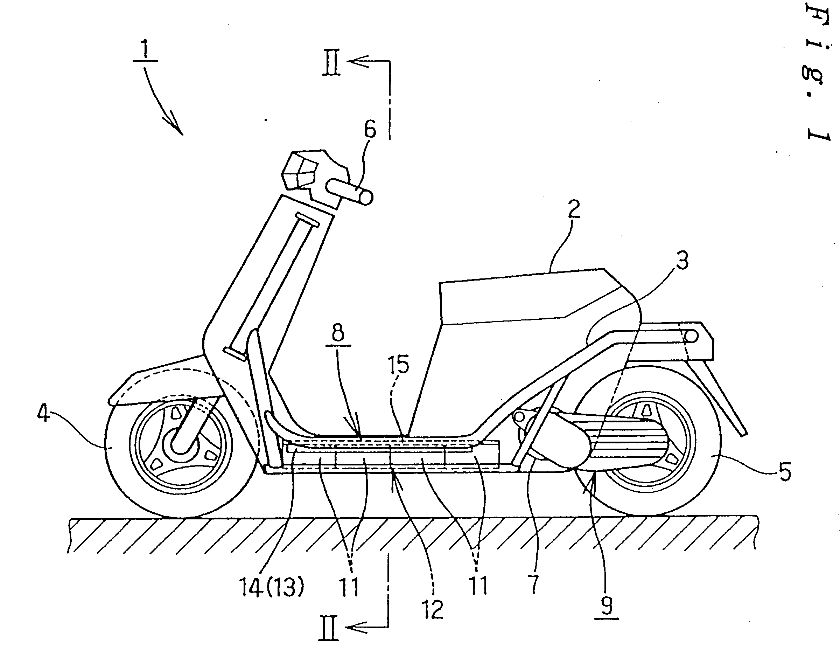

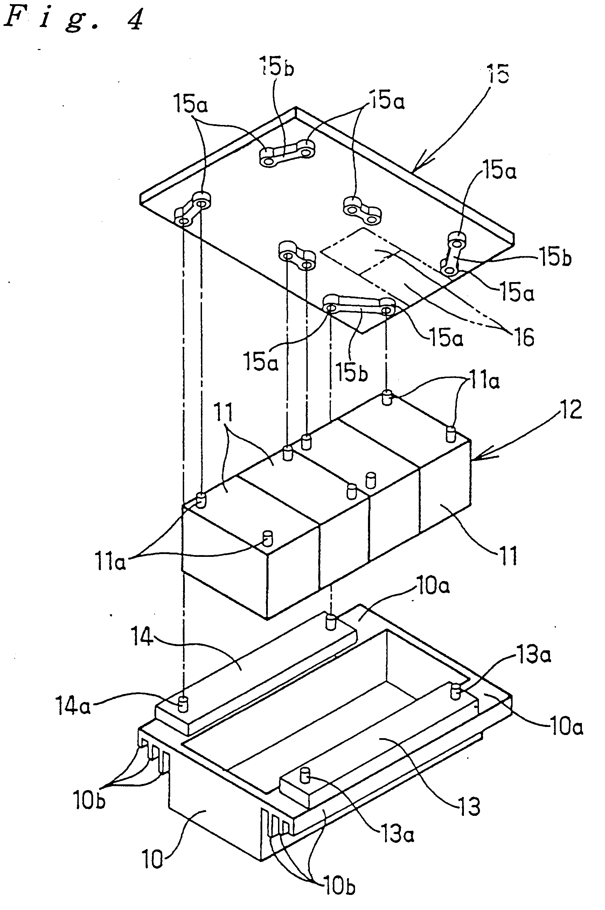

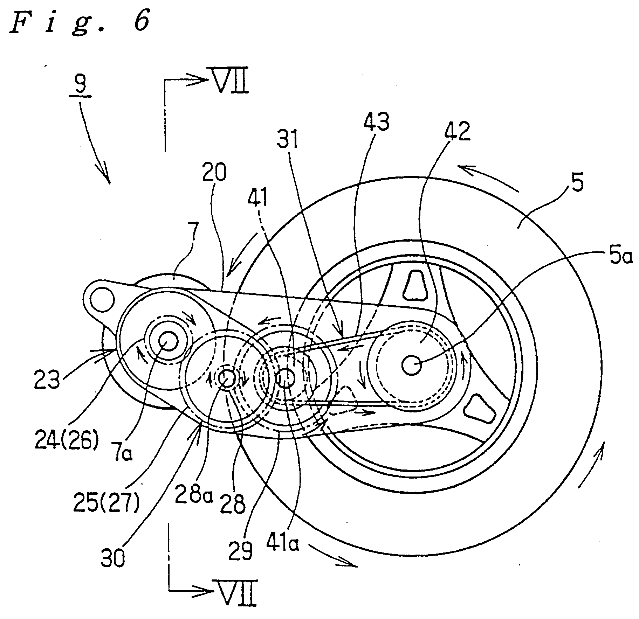

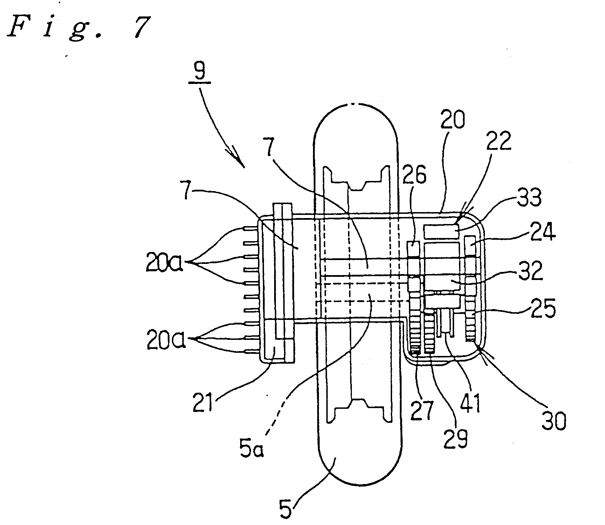

The present invention will hereinafter be described in connection with embodiments shown in Figs. 1 to 10. Note that the embodiments will be described, taking, merely as an example, an electric motorcycle as one kind of electric automobile.

In Fig. 1, an electric motorcycle 1 includes road wheels 4, 5 positioned respectively in front and rear parts of a vehicle body 2 and suspended from a main frame 3 of the vehicle body, as with a conventional motorcycle driven by an engine. The front wheel 4 is steered by a handle 6, and the rear wheel 5 is rotatively driven by not an engine, but an electric motor 7 for traveling.

An electric power unit 8 for housing a power source such as storage cells and supplying electric power is mounted upon the main frame 3, together with a power transmitting unit 9 for converting the electric energy supplied from the electric power unit 8 into mechanical movement by the electric motor 7 and transmitting rotation of the motor to the rear wheel. Other parts, such as an accelerator grip provided on the handle 6, brake levers, brake mechanisms and suspensions, some of them being not shown, are basically the same as those used in conventional motorcycles.

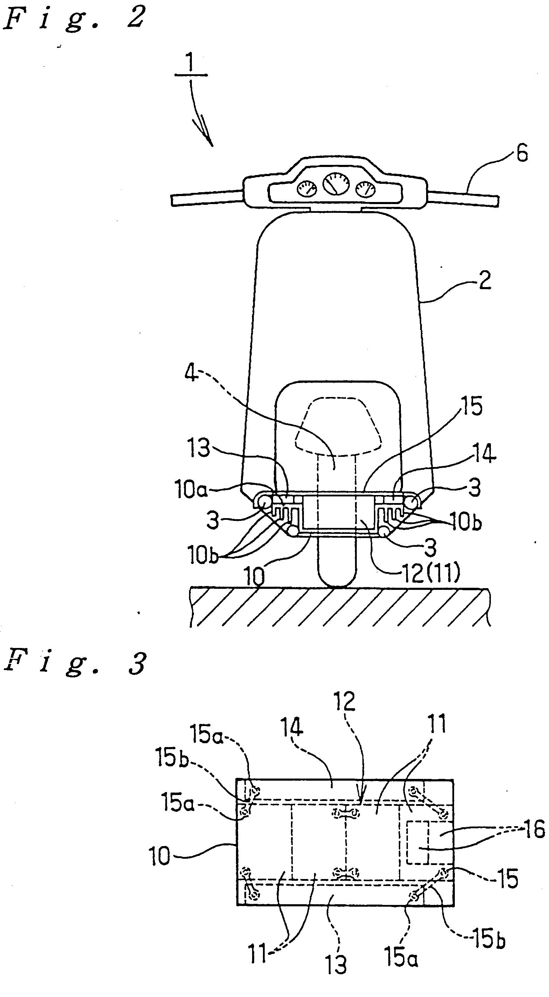

The electric power unit 8, as shown in Figs. 2 to 4, comprises an upwardly opening case 10, a battery power supply 12 made up of a plurality of storage cells 11 housed in the case 10, a charger 13 and a motor driving circuit 14 both disposed in the vicinity of the battery power supply 12, and a plate substrate 15 for electrically connecting those components 12, 13, 14 to each other and covering an entire upper surface of the case 10. The electric power unit 8 is mounted in a low-level position substantially centrally of the main frame 3 of the vehicle body 2 in such a manner that it can be replaced by new one at any time.

The case 10 of the electric power unit 8 is made of a material having good thermal conductivity, such as an aluminium alloy, and is formed into the shape of a long upwardly open box. The plurality of storage cells 11 making up the battery power supply 12 are housed in the open space of the case 10. Also, the case 10 is provided with mount plates 10a on both sides, the mount plates 10a being in the form of a long flat plate for supporting the charger 13 and the motor driving circuit 14. A multiplicity of large-sized heat radiating plates (heat sinks) 10b are integrally provided on a lower surface of each of the mount plates 10a, to extend in the longitudinal direction of the vehicle body. Accordingly, heat generated due to operation of the charger 13 and the motor driving circuit 14 mounted on the mount plates 10a is dissipated to air through the heat radiating plates so that the components can continue operating normally.

The charger 13 comprises a rectifying circuit, a transformer circuit, etc. and is employed when charging the storage cells with the electric power unit 8 kept mounted in place. Connector terminals 13a are projected on an upper surface of the charger 13. Since the amount of heat generated by the whole of the charger 13 during the charging operation is considerable, sufficient heat radiation is achieved through the large-sized heat radiating plates 10b provided on the case 10. Furthermore, with the charger 13 mounted near the battery power supply 12 in the case 10, the heat generated by the charger 13 can be conducted to the side of the storage cells 11 through the case 10 having high thermal conductivity, enabling the storage cells 11 of the battery power supply 12 to be heated appropriately in a low temperature environment such as that encountered in the winter. Even in the low temperature environment, therefore, since the storage cells 11 are heated appropriately with the operating heat of the charger 13, the storage cells can fully develop their charging/discharging ability and can be charged with a sufficient degree of capacity.

The motor driving circuit 14 primarily comprises a MOSFET circuit, and has connector terminals 14a projected on its upper surface. Chopper control is made by switching operation of the FET circuit to control the rotational speed of the motor. Since the amount of heat generated by the whole of the motor driving circuit is also considerable due to the switching operation, the case 10 is designed to achieve a sufficient degree of heat radiation through the large-sized heat radiating plates 10b provided on the case 10. In addition, with the motor driving circuit 14 mounted near the battery power supply 12, the heat generated by the motor driving circuit 14 can be conducted to the side of the storage cells 11 through the case 10 having high thermal conductivity, enabling the storage cells 11 of the battery power supply 12 to be heated appropriately in environment under low temperatures such as encountered in the winter. Even in the low-temperature environment, therefore, since the storage cells 11 are heated appropriately with the operating heat of the motor driving circuit 14, the storage cells can fully develop their charging/discharging ability, allowing electric automobiles to travel in a wider range of environment.

The plate substrate 15 is formed of a flat base plate having a larger area than at least an upper surface of the battery power supply 12. The plate substrate 15 serves to interconnect the components 12, 13, 14 mounted to the case 10 without using cables, and to mount various circuits 16 thereon. More specifically, on a lower surface of the plate substrate 15, connector sockets 15a are provided in positions corresponding to the connector terminals 11a, 13a, 14a of the storage cells 11 of the battery power supply 12, the charger 13 and the motor driving circuit 14 which are mounted in place. Then, the sockets 15a are interconnected between selected pairs by conductor plates 15b which are each in the form of a long bar and fixed to the plate substrate 15 by being cauked using a press. Further, the conductor plates 15b are made of copper and set to have a large thickness for preventing power loss between the components 12, 13, 14 connected to each other. Additionally, since the connector sockets 15a and the various circuits 16 are mounted on the lower surface of the plate substrate 15, it is possible to sufficiently ensure safety against electric shock and to protect the various circuits.

In a gap between the sockets 15a of the plate substrate 15 and the conductor plates 15b, the principal control circuits, as well as various additional circuits 16 can be mounted. For example, a monitor circuit for monitoring current and voltage conditions of each of the storage cells 11, a voltage equalizing circuit for separately discharging the storage cells so as to have even voltages when variations in voltage of the storage cells 11 are found as a result of the monitoring, circuits for driving and evaluating various sensors, etc. can be mounted on the plate substrate 15 together. Accordingly, a variety of circuits can easily be mounted and the addition of such circuits can provide the electric power unit 8 which is intelligent in that control of the storage cells is automated and upgraded. Also, with the circuits mounted on a single base plate, it is possible to control the circuits in a concentrated manner, facilitate electrical maintenance, and dispense with cord wiring between the circuits which are otherwise required in the vehicle body, enabling the device construction to be simplified.

With the electric power unit of this embodiment, as explained above, the battery power supply comprising a plurality of storage cells, the charger, and the motor driving circuit are mounted in and on the case, and the connectors of those components are coupled to the sockets provided on the plate substrate and wired by the conductor plates allowing a large current to flow therethrough, so that the components are connected to each other without using cables. Therefore, the drawbacks attributable to the cable connection can be solved totally. It is thus possible to prevent troubles caused by disconnection of the connecting cables and contact failures of the connectors. Also, since the storage cells can be interconnected in series or so in a predetermined way just by mounting the plate substrate in place, troublesome operation of attaching the connecting cables of the storage cells one by one is eliminated, the number of assembly steps can be reduced greatly, and the assembly is facilitated. Even when partly replacing the storage cells in ordinary use, the replacing operation is also likewise simplified.

When replacing the exhausted battery, an electric power unit having a reduced battery capacity need merely be replaced by another fully charged electric power unit at any time. Accordingly, there is no need to detach and attach the connecting cables whenever each storage cell is unloaded and loaded, thus enabling the replacing operation to be facilitated.

Further, when replacing the battery after the electric motorcycle or automobile has continued traveling, the motor driving circuit, which may fail to operate due to the heat generated by continuous operation, can also be replaced by new one under the normal temperature at the same time. This enables the electric automobile to further continue traveling and ensures stable traveling over a long distance.

When the electric power unit is replaced altogether, the life of storage cells can drastically be prolonged by charging the exhausted electric power unit under strict temperature control. More specifically, when a storage cell is charged in a conventional manner, it cannot be charged at a desired constant temperature because the temperature of the storage cell itself is raised during the charging, or the temperature of open air is varied depending on the season. With such temperature variations in the charging, reliability of lead cells used as the storage cells has lowered, the service life thereof has shortened, and the economical efficiency has reduced. By charging the electric power unit while it is entirely immersed in a constant-temperature water bath at 30 °C, for example, the electric power unit can be charged while keeping it in a proper temperature condition. It is thus possible to maintain performance of the storage cells at a satisfactory level and to prolong the cell life. As a result, the economical efficiency can be increased.

Further, since the case is made of a material having good thermal conductivity, the charger and the motor driving circuit are mounted on the case, and the large-sized heat radiating plates are provided near the mounted positions of those components for accelerating heat radiation, a great heat radiating effect can be provided, limits in operating temperature of the charger and the motor driving circuit can be raised, and the operation performance thereof can be improved.

Additionally, since the motor driving circuit and the charger are mounted in the vicinity of the battery power supply, the heat generated upon operation of the motor driving circuit or the charger can be conducted to the side of the storage cells through the case having high thermal conductivity, enabling the storage cells of the battery power supply to be heated appropriately and kept at a proper temperature. Even in a low temperature environment therefore, a deterioration in performance of the storage cells is prevented. Consequently, the charging/discharging ability of the storage cells can be maintained and the traveling performance of electric automobiles can be improved.

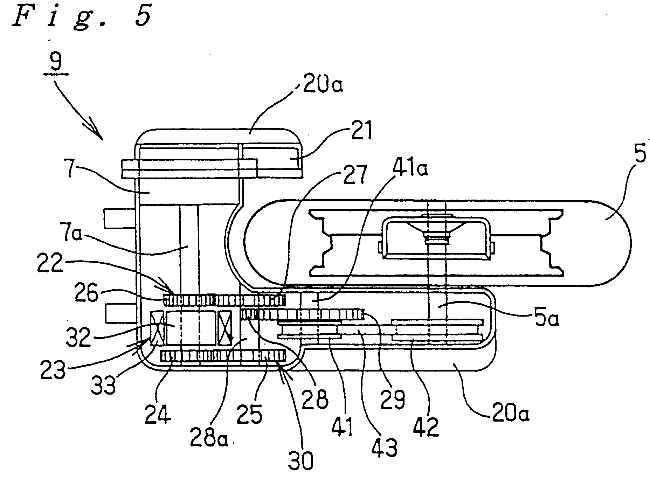

Next, a power transmitting unit of the present invention will be described in connection with the embodiment shown in Figs. 5 to 10.

A power transmitting unit 9 of this embodiment is disposed in an enclosed case 20, and comprises a motor driving circuit 21, an electric motor 7 for traveling, and an automatic 2-speed clutch transmission 22 for converting rotative driving forces generated by the motor 7 into proper torque at a proper rotational speed and transmitting it to the rear wheel 5. The power transmitting unit 9 is attached to the body frame 3 through shock absorbers (not shown).

More specifically, in Figs. 5 to 7, the electric motor 7 for traveling, which is housed in a casing structure cast from an aluminium alloy, is fixed in the enclosed case 20 at one end, and the rear wheel 5 is fixed to an axle supported by the enclosed case 20 at the other end through a bearing. The automatic 2-speed clutch transmission 22 is disposed between an output shaft 7a of the motor and a rear wheel axle 5a is disposed and housed in the enclosed case 20. Thus, power generated by the motor 7 is transmitted to the rear wheel 5 through the automatic 2-speed clutch transmission 22, whereupon the rear wheel 5 is rotated to propel the electric motorcycle for traveling.

The enclosed case 20 is formed of an aluminium alloy which is a light-weight material having good thermal conductivity. A multiplicity of large-sized heat radiating plates (heat sinks) 20a are integrally provided on an outer surface of the enclosed case 20, near the positions where the electric motor 7 and the automatic 2-speed clutch transmission 22 are mounted, to extend in the longitudinal direction of the vehicle body. Accordingly, while the motorcycle is traveling, a large amount of heat generated with operation of the electric motor 7 is efficiently dissipated to a large amount of air passing the large-sized heat radiating plates 20a so that the motor 7 can continue operating stably.

Further, the motor driving circuit 21 for controlling a rotational speed of the electric motor 7 is disposed near the large-sized heat radiating plates 20a for sharing them so as to provide sufficient heat radiation. Although the motor driving circuit 21 is disposed in the case 20 on the same side as the motor 7 in the illustrated embodiment, it may be disposed in the case 20 at a position near the automatic 2-speed clutch transmission 22 where the heat radiating effect is great.

The electric motor 7 for traveling is a large-power DC motor being superior in durability and reliability, and is horizontally mounted in the enclosed case 20. Output power of the electric motor 7 is transmitted to, or cut off from, the rear wheel 5 by a later-described dog clutch 23 of the automatic 2-speed clutch transmission 22.

The automatic 2-speed clutch transmission 22 comprises a dog clutch 23 fitted over the motor output shaft 7a to be rotatable therewith and movable in the axial direction, and a gear train 30 including first and second driver transmission gears 24, 26 which are supported respectively on both sides of the dog clutch 23 to be loosely rotatable in coaxial relation and are mechanically brought into contact with or away from the dog clutch 23. The first and second driver transmission gears 24, 26 of the gear train 30 and driven transmission gears 25, 27 in mesh with the driver transmission gears 24, 26, respectively, are selected to have predetermined gear ratios for rotation at predetermined reduced speeds. The driven transmission gears 25, 27 are connected to the same intermediate driver shaft 28a to drive an intermediate driver gear 28 fitted over the intermediate driver shaft 28a. An intermediate driven gear 29 in mesh with the intermediate driver gear 28 to be driven thereby drives a toothed transmission device 31 for driving the rear wheel axle 5a. The dog clutch 23 is mechanically brought into contact with or away from one of the driver transmission gears 24, 26 selected by electromagnetic forces, thereby transmitting or cutting off the motor output power to or from it. Thus, the power produced by the electric motor 7 is converted into proper torque at a proper rotational speed by a mechanical speed reduction mechanism, and the resulted driving forces are efficiently transmitted to the rear wheel axle 5a through the toothed belt transmission device 31 for rotatively driving the rear wheel 5.

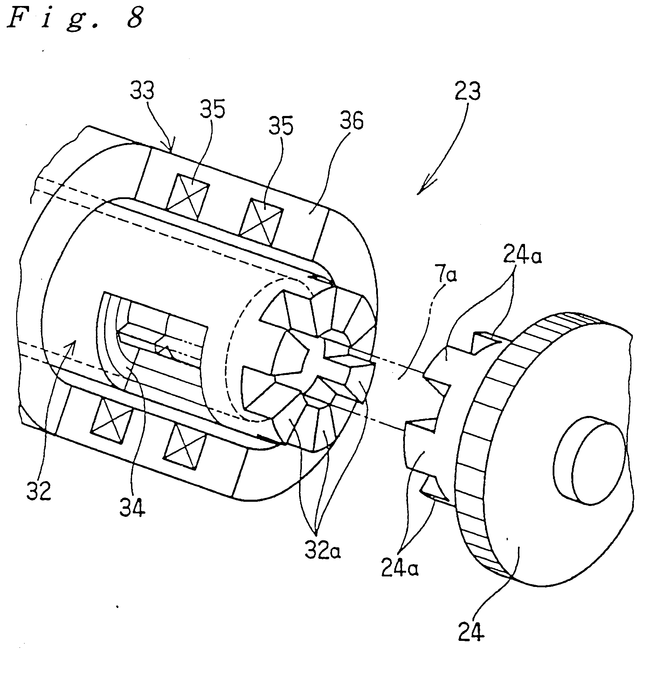

More specifically, as shown in Fig. 8, the dog clutch 23 comprises a clutch movable portion 32 coupled to the motor output shaft 7a through splines and movable in the axial direction thereof, and a cylindrical clutch driving portion 33 disposed around the clutch movable portion 32. Thus, the rotational power of the motor 7 is transmitted to the clutch movable portion 32 for rotating the clutch movable portion 32, and the clutch movable portion 32 is moved in the axial direction of the motor output shaft 7a. Then, the clutch movable portion 32 is moved toward one of the first and second driver transmission gears 24, 26 selected by electromagnetic forces from the clutch driving portion 33 for establishing mechanical contact therebetween. The selected first driver transmission gear 24 or second driver transmission gear 26 is thereby rotated to achieve clutch operation for transmission or cutoff of the power. Also, since the dog clutch 23 is operated by electromagnetic forces, it can be operated in electrical interlock with the electric motor 7 for traveling.

The dog clutch 23 is one kind (jaw clutch) of meshing clutches. The clutch movable portion 32 has rectangular projections 32a, 32a formed on each of its side surfaces intermittently along a circumference about the motor output shaft 7a, and rectangular projections 24a, 26a are likewise intermittently formed on respective side surfaces of the first and second driver transmission gears 24, 26 opposing the side surfaces of the clutch movable portion 32. Therefore, when the clutch movable portion 32 is moved toward the first or second driver transmission gear 24, 26, the projections 32a and 24a or 26a and recesses defined therebetween are brought into engagement with each other so that the motor output shaft 7a and the first or second driver transmission gear 24, 26 are mechanically coupled by the clutch movable portion 32.

While the rectangular projections are provided on the same circumference in each of both the side surfaces of the clutch movable portion 32 and the corresponding opposed side surfaces of the first and second driver transmission gears 24, 26 in this embodiment, the present invention is not limited to the illustrated arrangements. By way of example, projections and recesses may be in the form of trapezoids or spirals for mutual meshing to achieve mechanical coupling. Further, rather than arranging the projections along a circumference, a number of conical projections and recesses may be provided at random in each of the opposed side surfaces for mutual meshing.

In the dog clutch 23, the clutch movable portion 32 includes a permanent magnet 34 and the clutch driving portion 33 includes excitation coils 35.

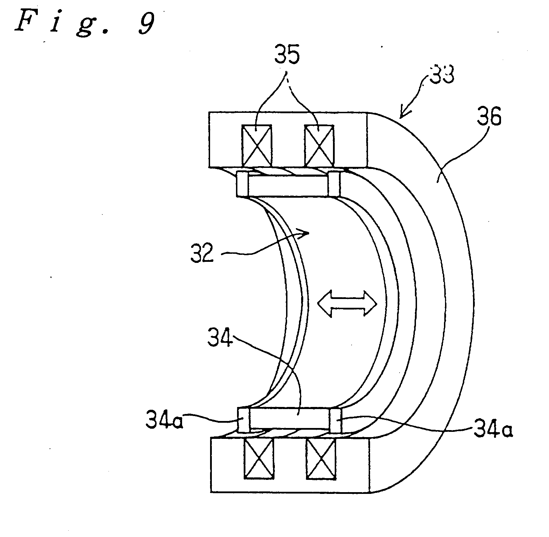

More specifically, as shown in Fig. 9, the clutch movable portion 32 incorporates a cylindrical permanent magnet 34 provided with yokes 34a, 34a at its both ends, the permanent magnet 34 having opposite end portions fixedly magnetized to N, S poles, respectively. By energizing the clutch driving portion 33 so that electromagnetic forces act upon the permanent magnet 34, the clutch movable portion 32 is moved in the desired axial direction to perform the make-and-break operation of the clutch.

The clutch driving portion 33 is in cylindrical form, has a larger outer diameter than the clutch movable portion 32, comprises a yoke 36 made of a ferromagnetic body, and has a substantially E-shape cross-section, and excitation coils 35 are disposed in respective gap spaces of the E-shaped yoke 36.

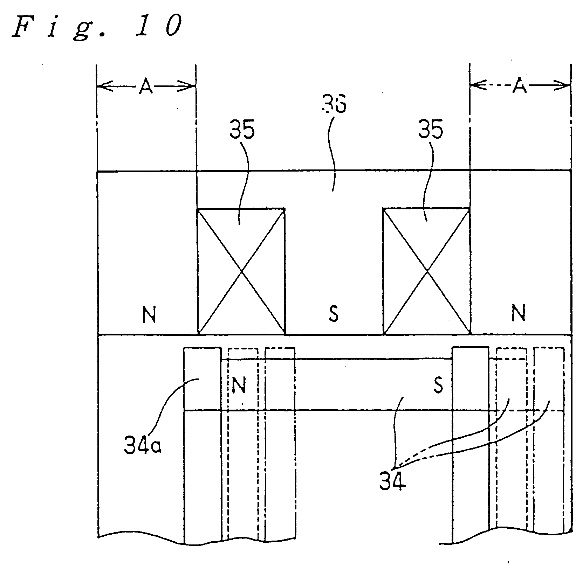

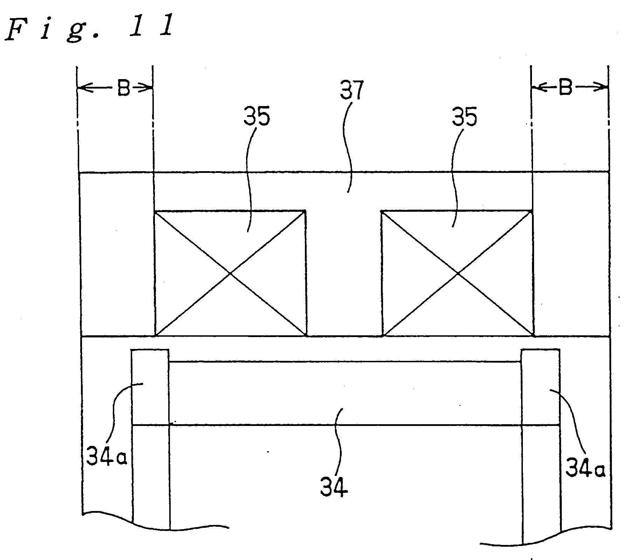

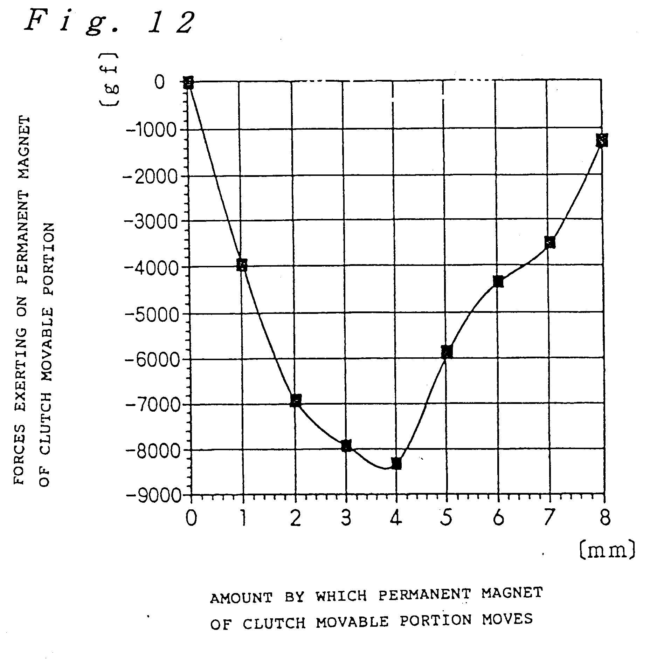

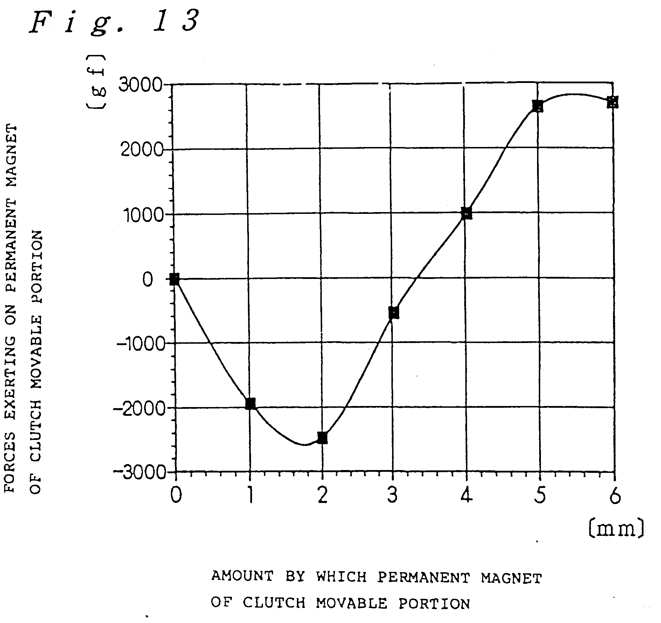

Further, as shown in Fig. 10, the E-shaped yoke 36 is formed to have a larger yoke thickness at both axial ends than a conventional E-shaped yoke 37 (Fig. 11), so that a magnetic circuit having an increased amount of magnetic flux at each of both the yoke ends is constituted. Specifically, a yoke thickness A at both the ends of the present E-shaped yoke 36 is set to be greater than a yoke thickness B at both the ends of the conventional E-shaped yoke 37. When the permanent magnet 34 is moved, a magnetic field generated by the permanent magnet 34 causes forces, though varying in amount, to act on itself always in one direction against movement of the permanent magnet, as shown in Fig. 12, for the conventional E-shaped yoke 37. On the other hand, for the present E-shaped yoke 36 having both the thickened yoke ends, the direction in which forces are acting on the permanent magnet 34 is reversed substantially at a mid point of movement of the permanent magnet 34, as shown in Fig. 13. Specifically, within a stroke of movement of the permanent magnet 34 from the start point indicated by solid lines in Fig. 10 to the nearly mid point indicated by broken lines, the permanent magnet 34 is subjected to forces acting in opposed relation to the direction of movement thereof. However, within a stroke of movement of the permanent magnet 34 from the nearly mid point to the end point indicated by two-dot-chain lines, the permanent magnet 34 is subjected to forces acting to propel it in the direction of movement.

Thus, when the clutch movable portion 32 is positioned at the end of its movement stroke, attraction forces are exerted on the permanent magnet 34 by cooperation of the permanent magnet 34 of the clutch movable portion 32 and the yoke of the clutch driving portion 33 so as to act always in the direction of causing the clutch movable portion 32 to move into engagement with the driver transmission gear 24 or 26. Therefore, once the clutch movable portion 32 reaches the stroke end, the clutch movable portion 32 will not return to the neutral position and can be held in a pressed condition against the driver transmission gear, even if the excitation coils 35 of the clutch driving portion 33 are not energized. Stated otherwise, since the direction in which the forces are acting on the clutch movable portion 32 is reversed before reaching the opposite ends of movement stroke of the clutch movable portion 32 such that forces pressing the clutch movable portion 32 in the direction of movement under excitation continues acting even after the excitation coils 35 are stopped from being not energized, it is just required to energize the excitation coils 35 of the clutch driving portion 33 only at the beginning of movement of the clutch movable portion 32. As a result, the power consumed by the clutch operation can be reduced to a necessary minimum value.

When breaking the connection of the clutch, i.e., when returning the clutch movable portion 32 of the dog clutch 23 to the neutral position, or when connecting it to the gear on the opposite side, a current is applied to the excitation coils 35 in the reversed direction. The clutch movable portion 32 is thereby moved in a similar manner as described above, but in the reversed direction.

The first and second transmission gear trains 30 connected to or disconnected from the dog clutch 23 comprise the first and second driver transmission gears 24, 26, which are supported respectively on both sides of the dog clutch 23 so as to be loosely rotatable over the motor output shaft 7a, the first and second driven transmission gears 25, 27 in mesh with the driver transmission gears 24, 26, respectively, the intermediate driver gear 28 fitted over the intermediate driver shaft 28a to which the first and second driven transmission gears 25, 27 are both fixed, and the intermediate driven gear 29 in mesh with the intermediate driver gear 28. The numbers of teeth of the first driver transmission gear and the first driven transmission gear are set to have a gear ratio of 30 : 1, for example, and the numbers of teeth of the second driver transmission gear and the second driven transmission gear are set to have a gear ratio of 10 : 1, for example. Thus, the rotational speed input from the motor output shaft is reduced by any of such gear ratios.

The speed-reduced driving forces are finally transmitted to the rear wheel 5 via the toothed belt transmission device 31. Specifically, the intermediate driven gear 29 is fixed to a pulley shaft 41a to which is fixed to a driver pulley 41. A toothed belt 43 is extended between the driver pulley 41 and a driven pulley 42 fixed to the rear wheel axle 5a. Therefore, the driving forces are highly efficiently transmitted through meshing between respective teeth on the pulleys 41, 42 and the belt 43. In other words, the transmission through teeth meshing is free from slippage and, hence, can be achieved with high reliability and efficiency.

Operation of the automatic 2-speed clutch transmission thus constructed will be described below.

First, the control circuit automatically makes a judgment based on the running conditions and issues a clutch switching command to start the clutch switching operation of the dog clutch 23.

When the electric motorcycle starts traveling, for example, the clutch transmission is shifted from the second gear side currently selected for traveling to the first gear side. More specifically, a current in the predetermined clutch switching direction is supplied to the excitation coils 35 of the clutch driving portion 33, whereupon the excitation coils 35 generates magnetic fields. These magnetic fields act on the permanent magnet 34 of the clutch movable portion 32, causing the clutch movable portion 32 to move toward the first driver transmission gear 24. At the same time, in response to a clutch switching signal, the torque and the rotational speed of the motor are controlled to be temporarily changed into proper ones, e.g., low torque. Accordingly, the clutch movable portion 32 and the first driver transmission gear 24 are smoothly engaged with each other, enabling the first driver transmission gear 24 to be rotatively driven at the same rotational speed as the motor output shaft 7a, and the energization of the excitation coils 35 is stopped. Then, the rotational speed of the motor is reduced at the gear ratio of the first transmission gear train, and the first driven transmission gear 25 is rotated at the reduced rotational speed. The resulting rotational driving forces are transmitted from the intermediate driver gear 28 on the same shaft as the first driven transmission gear 25 to the driver pulley 41 through the intermediate driven gear 29. Then, the driving forces of the driver pulley 41 are transmitted to the driven pulley 42 through the toothed belt 43, whereupon the rear wheel 5 coupled to the rear wheel axle 5a, to which the driven pulley 41 is fixed, is driven at the reduced rotational speed determined by the first transmission gear ratio, thereby propelling the electric motorcycle to travel.

When the traveling speed is increased and the motor is operated at a high rotational speed and high torque after the electric motorcycle is driven at the first transmission speed, the clutch transmission is shifted from the first gear side to the second gear side. More specifically, a current in the predetermined clutch switching direction is supplied to the excitation coils 35 of the clutch driving portion 33, whereupon the excitation coils 35 generate magnetic fields. These magnetic fields act on the permanent magnet 34 of the clutch movable portion 32, causing the clutch movable portion 32 to move toward the second driver transmission gear 26. At the same time, in response to a clutch switching signal, the torque and the rotational speed of the motor are controlled to be temporarily changed into proper ones. Accordingly, the clutch movable portion 32 and the second driver transmission gear 26 are smoothly engaged with each other, enabling the second driver transmission gear 26 to be driven at the same rotational speed as the motor output shaft 7a, and the energization of the excitation coils 35 is stopped. Then, the rotational speed of the motor is reduced at the gear ratio of the second transmission gear train, and the second driven transmission gear 27 is rotated at the reduced rotational speed, thereby propelling the electric motorcycle to continue traveling.

With this embodiment, as explained above, since the driver side and the driven side are coupled to each other through mechanical meshing using the dog clutch as one kind of meshing clutch operated by electromagnetic forces, and driving forces are transmitted through meshing between respective teeth on the belt and the pulleys, high transmission efficiency can be achieved. Specifically, since the combination of the meshing clutch and the toothed belt is free from slipping and ensures positive transmission of the driving forces, the transmission efficiency can be improved to about 90 %, as compared with 70 % achievable with the conventional friction transmission using a V belt. This is because utilization of friction forces produced between the belt and the pulleys for transmitting the driving forces therebetween necessarily causes slipping during the transmission to such an extent that appreciable problems occur in practical use, whereas no slipping is caused in the meshing transmission of this embodiment.

Also, since the make- and break-operation of the clutch is electrically performed by utilizing electromagnetic forces, the clutch can be actuated in electrical interlock with the motor to improve performance of the clutch operation. Specifically, when the clutch is actuated for the make- and break-operation, the torque and the rotational speed of the motor can be controlled to be temporarily changed into proper ones in response to the clutch switching signal. Therefore, meshing, engagement and disengagement between the clutch members can smoothly be effected, providing an agreeable feeling in the clutch operation and improving performance of the make- and break-operation of the clutch.

Further, since the motor driving circuit, the motor for driving, and the automatic 2-speed clutch transmission are housed as one unit in the enclosed case provided with the heat radiating plates, the case can serve as a casing while ensuring heat radiation, resulting in a simplified structure.

Additionally, since the electric wiring interconnecting the above components is housed in the case, the wiring can be protected sufficiently and reliability of the power and transmitting apparatus can be increased.

As described hereinabove, the electric power unit overcomes the drawbacks attributable to cable connection, since the battery power supply comprising the plurality of storage cells, the charger, and the motor driving circuit are mounted in and on the case, and the connectors of those components are coupled by the sockets to interconnect the components without using cables. It is thus possible to prevent troubles caused by disconnection of the connecting cables and contact failures of the connectors. Also, since the storage cells can be interconnected in series or so in a predetermined way just by mounting the plate substrate in place, troublesome operation of attaching the connecting cables of the storage cells one by one is eliminated.

When replacing the exhausted battery in usual case, it is just required to replace the electric power unit having a reduced battery capacity by another fully charged electric power unit at a time. Accordingly, there is no need to detach and attach the connecting cables whenever each storage cell is unloaded and loaded.

Further, when replacing the battery after the electric automobile has continued traveling, the motor driving circuit, which may fail to operate due to the heat generated by continuous operation, can also be replaced by new one under the normal temperature at the same time, enabling the electric automobile to further continue traveling.

When the electric power unit is thus replaced altogether, performance of the storage cells can be maintained at a satisfactory level and the cell life can drastically be prolonged by charging the exhausted electric power unit under strict temperature control. Specifically, when a storage cell is charged in a conventional manner, it cannot be charged at a desired constant temperature because the temperature of the storage cell itself is raised during the charging, or the temperature of open air is varied depending on the season. On the other hand, by charging the electric power unit of the present invention while it is entirely immersed in a constant-temperature water bath at 30 °C, for example, the electric power unit can be charged while keeping it in a proper temperature condition. It is thus possible to prevent a reduction in reliability of the storage cells due to temperature variations, maintain performance of the storage cells at a satisfactory level, and hence prolong the cell life.

Further, when the case is made of a material having good thermal conductivity, the charger and the motor driving circuit are mounted on the case, and the heat radiating plates are provided near the mounted positions of those components, heat radiation is accelerated and a great heat radiating effect is provided.

Additionally, when the motor driving circuit and the charger are mounted in the vicinity of the battery power supply, the heat generated upon operation of the motor driving circuit or the charger can be conducted to the side of the storage cells through the case having high thermal conductivity in low temperature environments such as are encountered in the winter, enabling the storage cells of the battery power supply to be heated appropriately and kept at a proper temperature. Even in low temperature environments therefore, a deterioration in performance of the storage cells is prevented.

In the power transmitting unit, since the make- and break-operation of the clutch is electrically performed by utilizing electromagnetic forces, the clutch can be actuated in electrical interlock with the motor to improve performance of the clutch operation. That is to say, when the clutch is actuated for the make- and break-operation, the torque and the rotational speed of the motor can be controlled to be temporarily changed into proper ones in response to the clutch switching signal.

Also, when the clutch movable portion is positioned at the end of its movement stroke, attraction forces are exerted on the permanent magnet by cooperation of the permanent magnet of the clutch movable portion and the yoke of the clutch driving portion so as to act always in the direction of causing the clutch movable portion to move into mesh with the driver transmission gear. Therefore, when the clutch movable portion once reaches the stroke end, the clutch movable portion will not return to the neutral position and can be held in a pressed condition against the driver transmission gear even if the excitation coils of the clutch driving portion are not energized. Otherwise, since the direction in which electromagnetic forces are acting on the clutch movable portion is reversed before reaching the opposite ends of movement stroke of the clutch movable portion such that the forces pressing the clutch movable portion in the direction of movement under excitation continues acting even after the excitation coils are stopped from being energized, it is just required to energize the excitation coils of the clutch driving portion only at the beginning of movement of the clutch movable portion. As a result, the power consumed by the clutch operation can be reduced to a necessary minimum value. When breaking the connection of the clutch, i.e., when returning the clutch movable portion of the dog clutch to the neutral position, or when connecting it to the gear on the opposite side, a current is supplied to the excitation coils in the reversed direction. The clutch movable portion is thereby moved in a similar manner as mentioned above, but in the reversed direction.

Further, when the automatic 2-speed clutch transmission is housed in the enclosed case provided with the heat radiating plates, the case can serve as a casing while ensuring efficient heat radiation, resulting in the simplified structure.

To conclude, the electric power unit can be assembled easily and replaced by new one at any time and houses the plurality of storage cells, the motor driving circuit and the charger in the case, and electrically connecting those components to each other by the plate substrate. Also, the power transmitting unit, which can increase the transmission efficiency and can be automatically operated in electrical interlock with the motor, uses the motor for traveling and the automatic 2-speed clutch transmission provided with the meshing clutch operable by electromagnetic forces. Thus, by realizing the unit structure of each of the electric power unit and the power transmitting unit, the present invention can improve the overall traveling ability of electric automobiles.

The aforegoing description has been given by way of example only and it will be appreciated by a person skilled in the art that modifications can be made without departing from the scope of the present invention as described in the claims.

## Claims

1. An electric power unit (8) for an electric vehicle comprising:
a battery power supply (12) comprising a plurality of storage cells;
a motor driving circuit (14);
a charger (13); and
a case (10) with a lid (15), which houses the storage cells (11);
the motor driving circuit and the charger being mounted to the case;
characterised in that:
the lid comprises a plate substrate having electrical connectors for electrically connecting the motor driving circuit (14), the charger (13) and the battery power supply (12); and the motor driving circuit (14), the charger (13) and the battery power supply (12) having connectors in positions corresponding to the connectors of the plate substrate (15).

2. An electric power unit (8) as claimed in claim 1, wherein the case (10) has high thermal conductivity.

3. An electric power unit (8) as claimed in claim 1 or 2, wherein at least one of the charger (13) and motor driving circuit (14) are positioned such that, in use, heat radiated therefrom reaches the cells (11).

4. An electric power unit (8) as claimed in any preceding claim wherein the case (10) comprises a respective heat radiating plate (10b) for at least one of the charger (13) and motor driving circuit (14).

5. An electric power unit (8) as claimed in any preceding claim wherein the plate substrate (15) bears sockets (15a) for electrical connection to respective terminals (11a, 13a, 14a) of the storage cells (11), charger (13) and motor driving unit (14).

6. An electric power unit (8) as claimed in claim 5, comprising at least one further circuit (16) between the sockets (15a).

7. An electric power unit (8) as claimed in claim 6, wherein the further circuit or circuits may be one or more of a control circuit, a monitoring circuit for monitoring current and voltage conditions of the storage cells (11), a voltage equalising circuit for discharging the storage cells (11) to equalise their voltage, and circuits for driving and evaluating sensors.

8. An electric power unit (8) as claimed in any preceding claim adapted so that it may be charged when immersed in a constant-temperature water bath.

## Patentansprüche

1. Elektrische Antriebseinheit (8) für ein Elektrofahrzeug, umfassend:
eine Batteriestromversorgung (12) mit einer Mehrzahl von Speicherzellen;
eine Motortreiberschaltung (14);
ein Ladegerät (13); und
ein Gehäuse (10) mit einem Deckel (15), das die Speicherzellen (11) aufnimmt;
wobei die Motortreiberschaltung und das Ladegerät an dem Gehäuse angebracht sind;
**dadurch gekennzeichnet**, daß:
der Deckel ein Plattensubstrat mit elektrischen Verbindern zum elektrischen Verbinden der Motortreiberschaltung (14), des Ladegeräts (13) und der Batteriestromversorgung (12) aufweist; und wobei die Motortreiberschaltung (14), das Ladegerät (13) und die Batteriestromversorgung (12) Verbinder an Stellen aufweisen, die den Verbindern des Plattensubstrats (15) entsprechen.

2. Elektrische Antriebseinheit (8) nach Anspruch 1, wobei das Gehäuse (10) eine hohe thermische Leitfähigkeit aufweist.

3. Elektrische Antriebseinheit (8) nach Anspruch 1 oder 2, wobei das Ladegerät (13) oder/und die Motortreiberschaltung (14) derart angeordnet sind, daß bei Gebrauch hiervon abgestrahlte Wärme die Zellen (11) erreicht.

4. Elektrische Antriebseinheit (8) nach einem der vorhergehenden Ansprüche, wobei das Gehäuse (10) für das Ladegerät (13) oder/und die Motortreiberschaltung (14) eine jeweilige Wärmeabstrahlplatte (10b) aufweist.

5. Elektrische Antriebseinheit (8) nach einem der vorhergehenden Ansprüche, wobei das Plattensubstrat (15) Buchsen (15a) zur elektrischen Verbindung mit jeweiligen Anschlüssen (11a, 13a, 14a) der Speicherzellen (11), des Ladegeräts (13) und der Motortreiberschaltung (14) trägt.

6. Elektrische Antriebseinheit (8) nach Anspruch 5, umfassend zumindest eine weitere Schaltung (16) zwischen den Buchsen (15a).

7. Elektrische Antriebseinheit (8) nach Anspruch 6, wobei die weitere Schaltung oder die weiteren Schaltungen ein oder mehrere Elemente einer Steuerschaltung, einer Überwachungsschaltung zum Überwachen von Strom- und Spannungszuständen der Speicherzellen (11), eine Spannungsausgleichsschaltung zum Entladen der Speicherzellen (11) zum Angleichen ihrer Spannung sowie Schaltungen zum Betrieb und Auswerten von Sensoren sein kann bzw. können.

8. Elektrische Antriebseinheit (8) nach einem der vorhergehenden Ansprüche, die so ausgelegt ist, daß sie geladen werden kann, wenn sie in ein Konstanttemperatur-Wasserbad eingetaucht ist.

## Revendications

1. Unité d'alimentation en énergie électrique (8) pour un véhicule électrique, comprenant :
une source d'alimentation par batterie (12) comprenant une pluralité d'accumulateurs ;
un circuit d'attaque de moteur (14) ; un chargeur (13) ; et
un bac (10) avec un couvercle (15), qui loge les accumulateurs (11) ;
le circuit d'attaque de moteur et le chargeur étant montés sur le bac ;
caractérisée en ce que :
le couvercle comprend un substrat en plaque comportant des connecteurs électriques pour relier électriquement le circuit d'attaque de moteur (14), le chargeur (13) et la source d'alimentation par batterie (12), et en ce que le circuit d'attaque de moteur (14), le chargeur (13) et la source d'alimentation par batterie (12) comportent des connecteurs dans des emplacements correspondant aux connecteurs du substrat en plaque (15).

2. Unité d'alimentation en énergie électrique (8) selon la revendication 1, dans laquelle le bac (10) a une conductivité thermique élevée.

3. Unité d'alimentation en énergie électrique (8) selon la revendication 1 ou 2, dans laquelle au moins l'un du chargeur (13) et du circuit d'attaque de moteur (14) est placé de telle manière que, en service, la chaleur qui en rayonne atteigne les accumulateurs (11).

4. Unité d'alimentation en énergie électrique (8) selon l'une quelconque des revendications précédentes, dans laquelle le bac (10) comprend une plaque de radiation thermique (10b) correspondante, pour au moins l'un du chargeur (13) et du circuit d'attaque de moteur (14).

5. Unité d'alimentation en énergie électrique (8) selon l'une quelconque des revendications précédentes, dans laquelle le substrat en plaque (15) porte des douilles (15a) pour une connexion électrique avec des bornes (11a, 13a, 14a) correspondantes des accumulateurs (11), du chargeur (13) et du circuit d'attaque de moteur (14).

6. Unité d'alimentation en énergie électrique (8) selon la revendication 5, comprenant au moins un circuit (16) supplémentaire entre les douilles (15a).

7. Unité d'alimentation en énergie électrique (8) selon la revendication 6, dans laquelle le ou les circuit(s) supplémentaire(s) peut ou peuvent être un ou plusieurs parmi un circuit de commande, un circuit de contrôle pour le contrôle des conditions de courant et de tension des accumulateurs (11), un circuit d'égalisation de tension pour la décharge des accumulateurs (11) afin d'égaliser leur tension, et des circuits pour l'attaque et l'évaluation de capteurs.

8. Unité d'alimentation en énergie électrique (8) selon l'une quelconque des revendications précédentes, conçue de manière à pouvoir être chargée lorsqu'elle est plongée dans un bain d'eau à température constante.
